Europäisches Patentamt

European Patent Office

Office européen des brevets

(19)

(11) **EP 1 533 803 A2**

(12) **EUROPEAN PATENT APPLICATION**

(43) Date of publication:
25.05.2005 Bulletin 2005/21

(51) Int Cl.$^7$: **G11B 9/00**

(21) Application number: 04027530.7

(22) Date of filing: 19.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 21.11.2003 JP 2003392773

(71) Applicant: **Pioneer Corporation**
Meguro-ku, Tokyo (JP)

(72) Inventors:
• **Takahashi, Hirokazu, c/o Pioneer Corporation**
Tsurugashima-shi Saitama (JP)
• **Onoe, Atsushi, c/o Pioneer Corporation**
Tsurugashima-shi Saitama (JP)
• **Chikuma, Kiyofumi, c/o Pioneer Corporation**
Tsurugashima-shi Saitama (JP)

(74) Representative:
**Reinhard - Skuhra - Weise & Partner GbR**
**Postfach 44 01 51**
**80750 München (DE)**

(54) **Recording / reproducing head, method of producing the same, and recording apparatus and reproducing apparatus**

(57) A recording / reproducing head (100) for performing at least one of a record operation of recording information onto a dielectric recording medium (20) and a reproduction operation of reproducing the information from the dielectric recording medium (20), the recording / reproducing head (100) provided with: a support member (130) which extends in a longitudinal direction; and a projection portion (110) which is mounted on the support member (130) such that a tip of the projection portion (110) faces the dielectric recording medium (20), the projection portion (110) having a ridge-line (110L) on the tip, the projection portion (110) being capable of contacting the dielectric recording medium (20) at one point (111) on the ridge-line (110L).

FIG. 1A

EP 1 533 803 A2

## FIG. 1B

111 — 110L — 110

## Description

BACKGROUND OF THE INVENTION

1. Field of the Invention

The present invention relates to a recording / reproducing head for recording and reproducing polarization information recorded on a dielectric substance, such as a ferroelectric recording medium, as well as a method of producing the recording / reproducing head, and a recording apparatus and a reproducing apparatus which use the recording / reproducing head.

2. Description of the Related Art

A technique of a recording / reproducing apparatus which uses SNDM (Scanning Nonlinear Dielectric Microscopy) for nano-scale analysis of a dielectric recording medium is suggested by the inventors of the present invention. In SNDM, it is possible to increase its resolution associated with the measurement to sub nanometer resolution, by using an electric conductive cantilever (or probe) with a small probe mounted on its tip, which is used for AFM (Atomic Force Microscopy) or the like. Recently, the development of a super high density recording / reproducing apparatus has been advanced, wherein the apparatus records data onto a recording medium having a recording layer made of a ferroelectric material, by using the technique of SNDM (refer to Japanese Patent Application Laying Open NO. 2003-085969).

The recording / reproducing apparatus of this type which uses SNDM reproduces information by detecting a positive or negative direction of polarization of the recording medium. This is performed by using a change in an oscillation frequency of a LC oscillator, which includes (i) a high frequency feedback amplifier including an L component, (ii) a conductive probe mounted on this amplifier, and (iii) a capacitance Cs of the ferroelectric material under the probe, caused by a change $\Delta C$ in a small capacitance due to a non-linear dielectric constant which have origin in the distribution of the positive and negative of the polarization. Namely, it is performed by detecting the change in the distribution of the positive and negative of the polarization, as a change $\Delta f$ in the oscillation frequency.

Moreover, by applying an alternating electric field whose frequency is sufficiently low with respect to the oscillation frequency in order to detect a difference in the positive and negative of the polarization, the oscillation frequency is changed along with the alternating electric field, and the rate of change in the oscillation frequency including its sign is determined by the non-linear dielectric constant of the ferroelectric material under the probe. Then, by FM (Frequency Modulation)-demodulating and extracting a component due to the alternating electric field, from a high-frequency signal of the LC oscillator which is FM-modulated in accordance with the change in the small capacitance $\Delta C$ along with the application of the alternating electric field, the record information (data) recorded on the ferroelectric recording medium is reproduced.

SUMMARY OF THE INVENTION

The record and reproduction of the record information is performed by using the probe as a recording / reproducing head. The probe can be broadly classified into a projection portion of a needle shape and a support portion for supporting the projection portion. By applying an electric field to between the projection portion and the recording medium, the information is recorded and reproduced as described above.

The projection portion can directly contact the recording medium. In particular, its tip portion is required to be needle-shaped or sphere-shaped, the size being several-tens nm or less, to practice the above-described recording and reproducing principle. There is, however, such a technical problem that it is difficult to form the needle-shaped member of several-tens nm or less in the conventional technique. For example, there is such a technical problem that even in trying to make the needle-shaped member of several-tens nm or less, the tip portion becomes flat or cannot be needle-shaped nor sphere-shaped. In such a case, the probe contacts a range of the dielectric recording medium which exceeds several-tens nm. Namely, such the contact as this between the surface of the probe and the dielectric recording medium may cause the application of an electric field to a range beyond a micro area or domain, which is one unit of a polarization condition as being an information unit. Because of this, there is such a technical problem that it is not possible to appropriately change the polarization condition and it is not impossible to detect the condition.

It is therefore an object of the present invention to provide a recording / reproducing head which has a relatively simple structure and whose tip portion can contact the dielectric recording medium on the order of several-tens nm or less, as well as a method of producing the recording / reproducing head relatively easily, and a recording apparatus and a reproducing apparatus which use the recording /reproducing head.

The above object of the present invention can be achieved by a recording / reproducing head for performing at least one of a record operation of recording information onto a dielectric recording medium and a reproduction operation of reproducing the information from the dielectric recording medium, the recording / reproducing head provided with: a support member which extends in a longitudinal direction (for example a longitudinal direction of the recording / reproducing head); and a projection portion which is mounted on the support member such that a tip of the projection portion faces the dielectric recording medium, the projection portion having a ridge-line on the tip, the projection portion being capable of contacting (including substantially contacting) the dielectric recording medium at one point on the ridge-line.

According to the recording / reproducing head of the present invention, the projection portion having a ridge-line on its tip can contact (or substantially contact) the dielectric recording medium at one point on the ridge-line. Therefore, it is possible to appropriately apply an electric filed in a domain (micro area) in which the polarization condition is recorded.

Specifically, the recording / reproducing head of the present invention is provided with the support member which extends in the longitudinal direction of the recording / reproducing head. It is preferable to use a material having electric conductivity as the support member, but as described later, it is possible to select an appropriate material in accordance with a resonance frequency of a resonance circuit (in other words, an oscillation frequency of an oscillator) in a reproducing apparatus. Alternatively, by selecting an appropriate material, it is also possible to change an vibration frequency obtained when the recording / reproducing head is moved along the surface of the information recording medium, as occasion demands. The projection portion is mounted on the support member such that the tip of the projection portion faces the dielectric recording medium. The projection portion may be mounted upright on the support member. The projection portion is also preferably constructed from a material having electric conductivity.

Particularly in the present invention, the projection portion has a ridge-line on the tip. The projection portion contacts or substantially contacts the dielectric recording medium at one point on the ridge-line. Incidentally, the "one point" here not only includes point contact as it is written, but also includes a range which can be regarded as the point contact in a recording apparatus and a reproducing apparatus as described later (e. g. a range with a diameter of approximately several tens nm). Namely, the tip of projection portion and the dielectric recording medium can contact on the order of several tens nm or less.

Normally, from the viewpoint of the application of an electric field to the domain, the projection portion is preferably formed such that it can contact the dielectric recording medium at one point (or in a range of approximately 10 nm order) on the tip portion. Specifically, the projection portion preferably has a shape such as a quadrangular pyramid. However, it is difficult to realize such a shape on the order of nanometer, and even if it realizes, it is not possible to produce it with stability and with a good yield. Therefore, the shape tends to be a pyramid with a ridge-line on the tip in many cases. It is conceivable to produce the projection portion that contacts the dielectric recording medium at one point, by mechanically cutting the tip of the project portion having the above shape (e.g. the pyramid shape with a ridge-line on the tip). But the mechanical cutting is difficult on the order of nanometer, and the production processes for the recording / reproducing head are difficult.

However, in the present invention, even in the case of the projection portion having such a shape (the pyramid shape with the ridge-line on the tip), the projection portion is formed to contact the dielectric recording medium at one point on the ridge-line in advance. For example, the ridge-line may be formed with an inclination with respect to the horizontal direction of the record / reproducing head (or the dielectric recording medium), or as described later, with an inclination with respect to the recording surface of the dielectric recording medium. By this, even without a shape such as a quadrangular pyramid, it is possible to contact the dielectric recording medium appropriately at one point on the ridge-line. Therefore, if the recoding / reproducing head of the present invention is used for a recording apparatus described later, there is such an advantage upon recording that it is possible to appropriately apply the electric field from the one point on the ridge-line, with respect to a domain whose polarization condition is desired to be changed, for example, without influence on the polarization conditions of adjacent domains. Moreover, if the recoding / reproducing head of the present invention is used for a reproducing apparatus described later, there is such an advantage upon reproducing that it is possible to appropriately apply an alternating electric field from the one point on the ridge-line, with respect to a domain whose polarization condition is desired to be detected, for example, without its reproduction signal influenced by the polarization conditions of adjacent domains. Therefore, it is possible to stabilize the record operation and the reproduction operation.

Consequently, according to the recording / reproducing head of the present invention, the tip thereof and the dielectric recording medium can contact on the order of several tens nm or less. By this, it is possible to appropriately record and reproducing the information.

Moreover, the support member and the projection portion may be formed in one body. Namely, even if the support member and the projection portion are formed from a single material, if the support member and the projection portion can be distinguished from a difference in their shapes, then, this aspect is included in the present invention.

In one aspect of the recording / reproducing head of the present invention, the ridge-line is inclined with respect to a recording surface of the dielectric recording medium.

According to this aspect, since the ridge-line is inclined with respect to the recording surface, it is possible to contact the dielectric recording medium (or the recording surface thereof) at one point on the ridge-line (i.e. on one end portion (point) of the ridgeline).

In this case, the ridge-line may be inclined or may not be inclined with respect to the support member. However, if the support member is placed along or in parallel with the recording surface of the dielectric recording medium, the ridge-line is preferably inclined even with respect to the support member. On the other hand, if the support member is not placed along or in parallel with the recording surface of the dielectric recording medium, the ridge-line may not be inclined even with respect to the support member.

In this aspect, the projection portion is provided with a crystal, and a crystal axis of the crystal is inclined with respect to a normal line of the recording surface of the dielectric recording medium and crosses the ridge-line at substantially right angles.

By constituting in this manner, in relation to the crystal axis that is inclined with respect to the normal line of the recording surface and that crosses the ridge-line at substantially right angles, it is possible to realize such a structure that the mechanical strength on the ridge-line of the inclined projection portion is extremely high. For example, if a crystal which has a not-inclined crystal axis with respect to the normal line of the recording surface and which has a ridge-line extending in a first direction is polished or the like to be a projection portion which has a ridge-line extending in a second direction different from the first direction, the projection portion possibly has low mechanical strength on the ridge-line in relation with the crystal axis.

In another aspect of the recording / reproducing head of the present invention, the ridge-line extends along the longitudinal direction.

According to this aspect, because of the ridge-line which is inclined along the longitudinal direction, the projection portion can contact the dielectric recording medium at one point on the ridge-line. Particularly if the recording / reproducing head of the present invention is used as a cantilever, it can contact the dielectric recording medium at one point on the ridge-line, regardless of the slight wobble (or the slight oscillation) of the support member which extends along the longitudinal direction. Even if the ridge-line does not extend along the longitudinal direction, for example, if it extends along a direction crossing the longitudinal direction, it is possible to receive the above-described various benefits from the viewpoint of the possibility of contact with the dielectric recording medium at one point.

In another aspect of the recording / reproducing head of the present invention, the projection portion is formed by using a mold which is formed by performing anisotropic etching with respect to an offcut substrate.

According to this aspect, by performing anisotropic etching with respect to the offcut substrate, as described later, it is possible to realize the shape of the projection portion which can contact the dielectric recording medium at one point on the ridge-line relatively easily. Therefore, the projection portion can contact the dielectric recording medium at one point on the ridge-line.

The above object of the present invention can be also achieved by a production method of producing the above-described recording /reproducing head (including its various aspects), the production method provided with: a mold-forming process of forming a mold for forming the projection portion and the support member; and a member-forming process of forming the projection portion and the support member by using the formed mold, an offcut substrate being used as the mold in the mold-forming process.

According to the production method of the present invention, it is possible to produce the above-described recording / reproducing head of the present invention relatively easily.

Specifically, at first, in the mold-forming process, the mold for forming the recording / reproducing head is formed. Here, it is possible to form the mold by combining various processes, such as patterning by a resist and etching or the like. Particularly in the present invention, the offcut substrate whose crystal axis is inclined with respect to the surface of the substrate is used as the mold in the mold-forming process. The use of such an offcut substrate allows the formation of the mold in which the ridge-line is inclined in advance, when the mold portion for forming the projection portion is formed. Namely, it is possible to relatively easily form the mold for forming the projection portion which can contact the dielectric recording medium at one point on the ridge-line.

If the offcut substrate is not used, the mold is formed such that a portion of the ridge-line is parallel to the surface of the mold without an inclination, so that it is difficult to form the shape of the recording / reproducing head of the present invention. It is conceivable that the addition of machining by another process to this mold allows the formation of the mold for forming the shape in which the ridge-line is inclined, but this requires for fine machining (micro machining) on the order of nanometer, which is really difficult in reality and is expensive in cost. However, in the present invention, the fine machining on the order of nanometer is unnecessary by using the offcut substrate as the mold, and it is possible to form the mold for forming the shape of the projection portion of the recording /reproducing head of the present invention at low cost.

Then, in the member-forming process, the projection portion and the support member are formed. Here, they can be formed by using a film formation method (or a film growth method) or the like. Since the mold is formed in advance such that the ridge-line of the projection portion is inclined in the mold-forming process, it is possible to produce the above-described recoding / reproducing head of the present invention, relatively easily, without using a special method in the member-forming process.

Consequently, according to the production method of the present invention, it is possible to produce the above-described recoding / reproducing head of the present invention efficiently and relatively easily.

Incidentally, the production method of the present invention can take various aspects in association with the various aspects of the recording / reproducing head of the present invention.

In one aspect of the production method of the present invention, the mold for forming the projection portion is formed by performing anisotropic etching in the mold-forming process.

According to this aspect, in the case that a silicon substrate being the offcut substrate is used as the mold, by performing anisotropic etching with respect to the offcut substrate, the etching is performed with respect to a direction along the crystal axis (e.g. the normal direction of a (100) surface of the substrate), while the etching is relatively difficult to be performed in directions which are not along the crystal axis (e.g. the normal direction of a (111) surface of the substrate). Therefore, it is possible to relatively easily form the mold that the ridge-line of the projection portion is inclined, in accordance with the direction of the crystal axis (e.g. a direction of the offcut of the offcut substrate).

In an aspect of the production method of forming the mold by using the anisotropic etching as described above, the anisotropic etching may be performed by using a rectangular masking, in forming the mold for forming the projection portion in the mold-forming process.

By constituting in this manner, it is possible to produce the mold for forming such a shape that the ridge-line is inclined in accordance with the rectangular masking.

Normally, in order to produce the recording / reproducing head having the projection portion which can contact the dielectric recording medium at one point (e.g. the project portion having a quadrangular pyramid shape), it is necessary to make a square masking. However, it is difficult to form such a square masking that an error between the long side and the short side is approximately several-tens nanometer order, and it is expensive to do so. However, according to this aspect of the production method of the present invention, even if the masking is not square, but if it is rectangular, it is possible to produce the above-described recording / reproducing head of the present invention.

In another aspect of the production method of the present invention, at least the projection portion is formed by growing a crystal in a concave portion which is etched with an inclination in association with at least the projection portion in the mold in the member-forming process.

According to this aspect, in relation to the crystal axis of the crystal growing in the inclined concave portion, the projection portion constructed from the crystal whose growth is completed in the end has extremely high mechanical strength on the inclined ridge-line. For example, if a crystal is grown in a not-inclined concave portion and then it is polishing or the like, to thereby incline the ridge-line of the projection portion, the projection portion possibly has low mechanical strength on the ridge-line, in relation to the crystal axis.

The above object of the present invention can be also achieved by a recording apparatus for recording data onto a dielectric recording medium, the recording apparatus provided with: the above-described recording / reproducing head of the present invention (including its various aspects); and a record signal generating device for generating a record signal corresponding to the data.

According to the recording apparatus of the present invention, it is possible to record the data on the basis of the record signal generated by the recording signal generating device, while taking advantage of the above-described recording / reproducing head of the present invention. Namely, there is such an advantage upon the record operation that it is possible to appropriately apply an electric field from the one point on the ridge-line, with respect to a domain whose polarization condition is desired to be changed, for example, without influence on the polarization conditions of adjacent domains. If the projection portion can contact not at one point but on the entire ridge-line or in a broad range of the ridge-line, there is a possibility that even the polarization conditions of the adjacent domains may be changed. However, according to the recording apparatus of the present invention, it is possible to remove such a bad influence and stabilize the record operation.

The above object of the present invention can be also achieved by a reproducing apparatus for reproducing data recorded on a dielectric recording medium, the reproducing apparatus provided with: the above-described recording / reproducing head of the present invention (including its various aspects); an electric field applying device for applying an electric field to the dielectric recording medium; an oscillating device whose oscillation frequency (resonance frequency) varies depending on a difference in a capacitance corresponding to a non-linear dielectric constant of the dielectric recording medium; and a reproducing device for demodulating and reproducing an oscillation signal from the oscillating device.

According to the reproducing apparatus of the present invention, by applying an electric field to the dielectric recording medium by using the electric filed applying device, the oscillation frequency of the oscillating device is changed, due to a change in the capacitance corresponding to a change in the non-linear dielectric constant of the dielectric recording medium. Then, the oscillation signal corresponding to the change in the oscillation frequency of the oscillating device is demodulated and reproduced by the reproducing device, to thereby reproduce the data.

Particularly in the present invention, the data can be reproduced by taking advantage of the above-described recording /reproducing head of the present invention. Namely, there is such an advantage that it is possible to appropriately apply an alternating electric field from the one point on the ridge-line, with respect to a domain whose polarization condition is desired to be detected, for example, without its reproduction signal influenced by the polarization conditions of adjacent domains. If the projection portion can contact not at one point but on the entire ridge-line or in a broad range of the ridge-line, there is a possibility that the electric field is applied even with respect to the adjacent domains. Thus, there is the possibility that the change in the capacitance by the polarization conditions of the adjacent domains is detected, to thereby change the oscillation frequency which has the origin in the polarization condition of a domain which is originally desired to be reproduced. However, according to the reproducing apparatus of the present invention, it is possible to remove such a bad influence and stabilize the reproduction operation.

The nature, utility, and further features of this invention will be more clearly apparent from the following detailed description with reference to preferred embodiment of the invention when read in conjunction with the accompanying drawings briefly described below.

As explained above, according to the recording / reproducing head of the present invention, it is provided with the support member and the projection portion. Therefore, the tip thereof and the dielectric recording medium can contact (or substantially contact) on the order of several tens nm or less. By this, it is possible to appropriately record and reproduce the information.

Moreover, according to the production method of the present invention, it is provided with the mold-forming process and the member-forming process. Therefore, it is possible to produce the recording / reproducing head of the present relatively easily and efficiently.

Moreover, according to the recording apparatus of the present invention, it is provided with the recording / reproducing head and the record signal generating device. Therefore, it is possible to receive various benefits owned by the recording / reproducing head of the present invention, and thus, it is possible to record the data with more stability.

Furthermore, according to the reproducing apparatus of the present invention, it is provided with: the recording / reproducing head; the electric field applying device; the oscillating device; and the reproducing device. Therefore, it is possible to receive various benefits owned by the recording / reproducing head of the present invention, and thus, it is possible to reproduce the data with more stability.

BRIEF DESCRIPTION OF THE DRAWINGS

FIG. 1A and FIG. 1B are a cross sectional view and a plan view, respectively, conceptually showing one specific example of a recording / reproducing head in an embodiment of the present invention;

FIG. 2A and FIG. 2B are a cross sectional view and a plan view, respectively, conceptually showing another specific example of the recording / reproducing head in the embodiment of the present invention;

FIG. 3 is a cross sectional view conceptually showing another specific example of the recording / reproducing head in the embodiment of the present invention;

FIG. 4 is a cross sectional view conceptually showing a position relationship between a dielectric recording medium and the recording / reproducing head in the embodiment of the present invention;

FIG. 5A, FIG. 5B, and FIG. 5C are a cross sectional view, a plan view, and a cross sectional view, respectively, conceptually showing a comparison example of the recording / reproducing head in the embodiment of the present invention;

FIG. 6 is a cross sectional view conceptually showing a position relationship between the dielectric recording medium and the recording / reproducing head in the embodiment of the present invention;

FIG. 7 is a cross sectional view conceptually showing one process of a production method for the recording / reproducing head in the embodiment of the present invention;

FIG. 8 is a cross sectional view conceptually showing another process of the production method for the recording / reproducing head in the embodiment of the present invention;

FIG. 9A and FIG. 9B are a cross sectional view and a plan view, respectively, conceptually showing another process of the production method for the recording / reproducing head in the embodiment of the present invention;

FIG. 10A and FIG. 10B are a cross sectional view and a plan view, respectively, conceptually showing another process of the production method for the recording / reproducing head in the embodiment of the present invention;

FIG. 11A and FIG. 11B are a cross sectional view and a plan view, respectively, conceptually showing another process of the production method for the recording / reproducing head in the embodiment of the present invention;

FIG. 12A and FIG. 12B are a cross sectional view and a plan view, respectively, conceptually showing another process of the production method for the recording / reproducing head in the embodiment of the present invention;

FIG. 13A and FIG. 13B are a cross sectional view and a plan view, respectively, conceptually showing another process of the production method for the recording / reproducing head in the embodiment of the present invention;

FIG. 14 is a cross sectional view conceptually showing another process of the production method for the recording / reproducing head in the embodiment of the present invention;

FIG. 15 is a cross sectional view conceptually showing another process of the production method for the recording / reproducing head in the embodiment of the present invention;

FIG. 16 is a cross sectional view conceptually showing another process of the production method for the recording / reproducing head in the embodiment of the present invention;

FIG. 17 is a cross sectional view conceptually showing another process of the production method for the recording / reproducing head in the embodiment of the present invention;

FIG. 18 is a cross sectional view conceptually showing another process of the production method for the recording / reproducing head in the embodiment of the present invention;

FIG. 19A and FIG. 19B are a cross sectional view and a plan view, respectively, conceptually showing another process of the production method for the recording / reproducing head in the embodiment of the present invention;

FIG. 20A and FIG. 20B are a cross sectional view and a plan view, respectively, conceptually showing another process of the production method for the recording / reproducing head in the embodiment of the present invention;

FIG. 21 is a cross sectional view conceptually showing another process of the production method for the recording / reproducing head in the embodiment of the present invention;

FIG. 22 is a cross sectional view conceptually showing another process of the production method for the recording / reproducing head in the embodiment of the present invention;

FIG. 23 is a side view conceptually showing a structure of one modified example of the recording / reproducing head in the embodiment of the present invention;

FIG. 24A and FIG. 24B are side views conceptually showing a structure of another modified example of the recording / reproducing head in the embodiment of the present invention;

FIG. 25 is a block diagram conceptually showing a basic structure of a dielectric recording / reproducing apparatus in an embodiment which adopts the recording / reproducing head in the embodiment of the present invention;

FIG. 26A and FIG. 26B are an explanatory diagram and a cross sectional view, respectively, conceptually showing a dielectric recording medium used for information reproduction on the dielectric recording / reproducing apparatus in the embodiment;

FIG. 27 is a cross sectional view conceptually showing a record operation of the dielectric recording / reproducing apparatus in the embodiment; and

FIG. 28 is a cross sectional view conceptually showing a reproduction operation of the dielectric recording / reproducing apparatus in the embodiment.

## DETAILED DESCRIPTION OF THE PREFERRED EMBODIMENTS

The embodiment associated with the recording / reproducing head of the present invention will be hereinafter explained with reference to the drawings.

(1) Embodiment of Recording / Reproducing Head

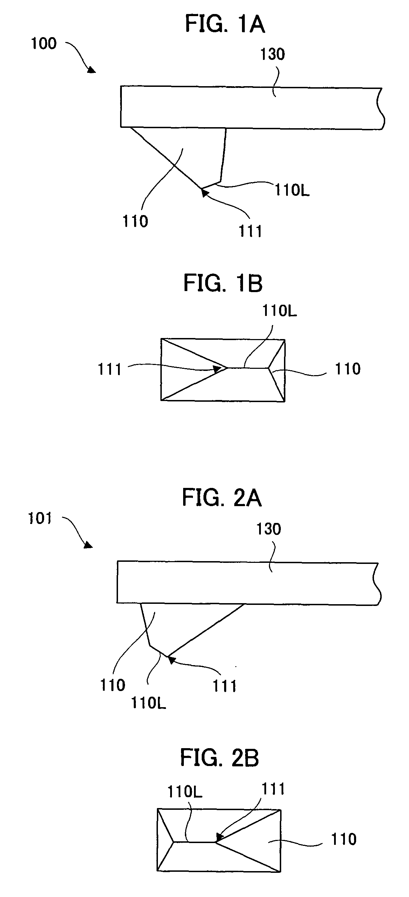

At first, with reference to FIGs. 1 to FIGs. 24, the embodiment associated with the recording / reproducing head of the present invention will be explained.

(i) Structure of Recording / Reproducing Head

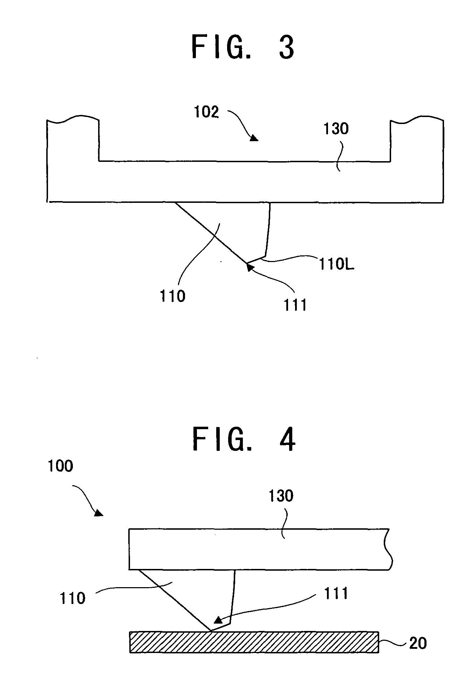

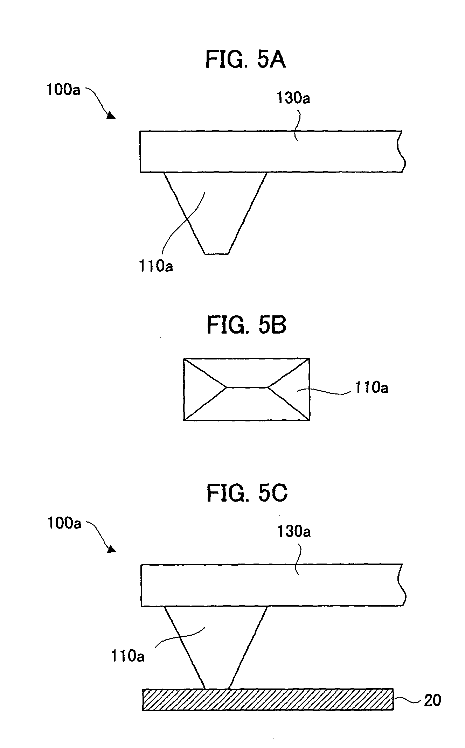

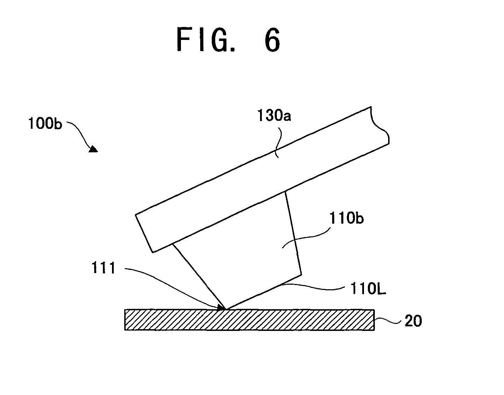

At first, the recording / reproducing head in the embodiment will be explained with reference to FIGs. 1 to FIG. 6. FIG. 1A and FIG. 1B conceptually show one example of the structure of the recording / reproducing head in the embodiment. FIG. 2A and FIG. 2B conceptually show another specific example of the structure of the recording / reproducing head in the embodiment. FIG. 3 conceptually shows another specific example of the structure of the recording / reproducing head in the embodiment. FIG. 4 conceptually shows a position relationship with a dielectric recording medium when the recording / reproducing head in the embodiment performs record and reproduction operations. FIG. 5A, FIG. 5B, and FIG. 5C conceptually show a comparison example of the recording /reproducing head in the embodiment. FIG. 6 conceptually shows a position relationship between the dielectric recording medium and the recording / reproducing head in the embodiment.

As shown in FIG. 1A, a recording / reproducing head 100 in the embodiment is provided with: a projection portion 110; and a support member 130.

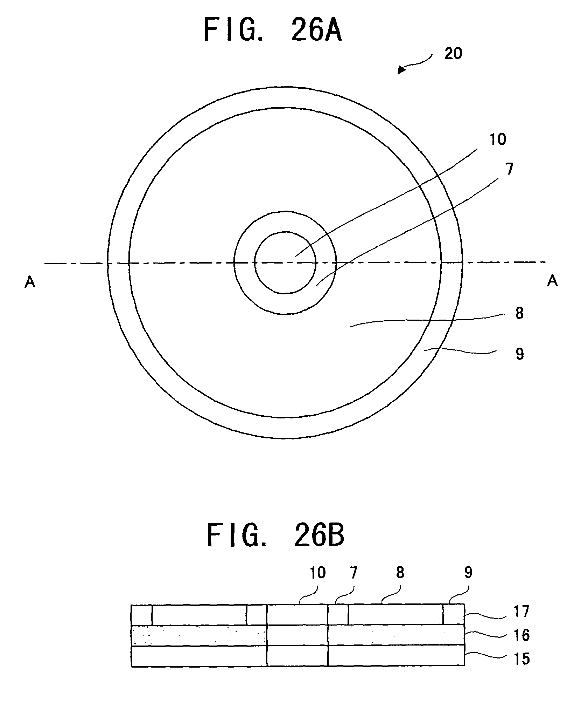

The projection portion 110 has a narrowed and pointed tip so that an electric field is applied to a dielectric recoding medium 20 as described later (refer to FIG. 26) from the tip side in the record /reproduction operations of the recording / reproducing head 100. In particular, the projection portion 110 preferably has electric conductivity, obtained by doping boron or the like to diamond at the time of production. Moreover, not only diamond, but also a material having electric conductivity, such as boron nitride, can be used. However, the projection portion 110 is preferably constructed by using a harder material because it could contact the dielectric recording medium 20. The tip portion of the projection portion 110 is a significant factor to determine the radius of the polarization formed correspondingly to the record data recorded onto the dielectric recording medium 20 as described later. Thus, out of the tip portion, particularly, the size of a portion which directly contacts the dielectric recording medium 20 is preferably extremely small. For example the radius of the portion which directly contacts the dielectric recording medium 20 is on the order of 10 nm.

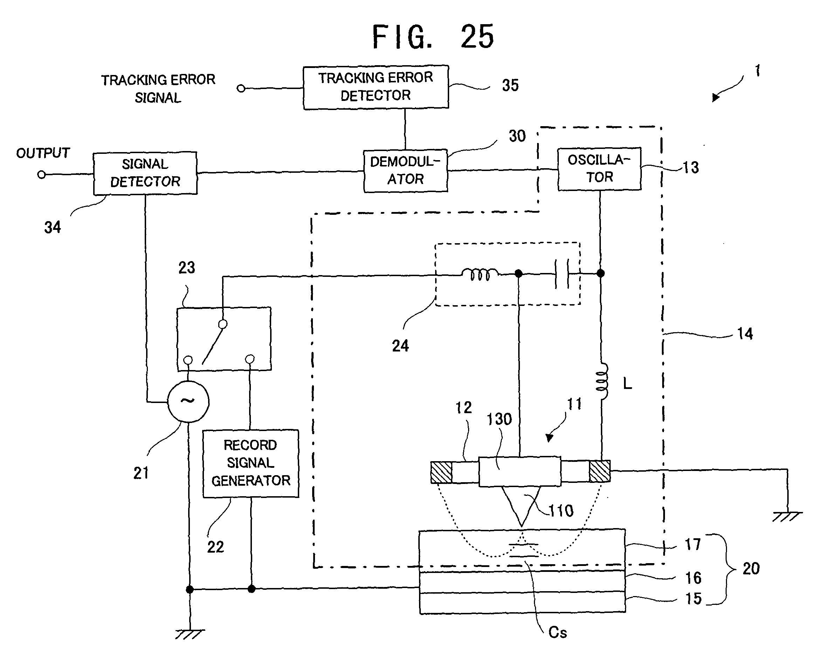

Particularly in the embodiment, the portion which can actually contact (or substantially contact) the dielectric recording medium 20 out of the projection portion 110 (i.e. the tip portion of the projection portion 110) is a point (a contact point or a contact portion) 111 positioned at one end of a ridge-line 110L and is satisfied with the size of 10 nm order described above. Therefore, on a dielectric recording / reproducing apparatus 1 as described later (refer to FIG. 25), the information is recorded and reproduced by applying an electric field to between the point 111 and the dielectric recording medium 20.

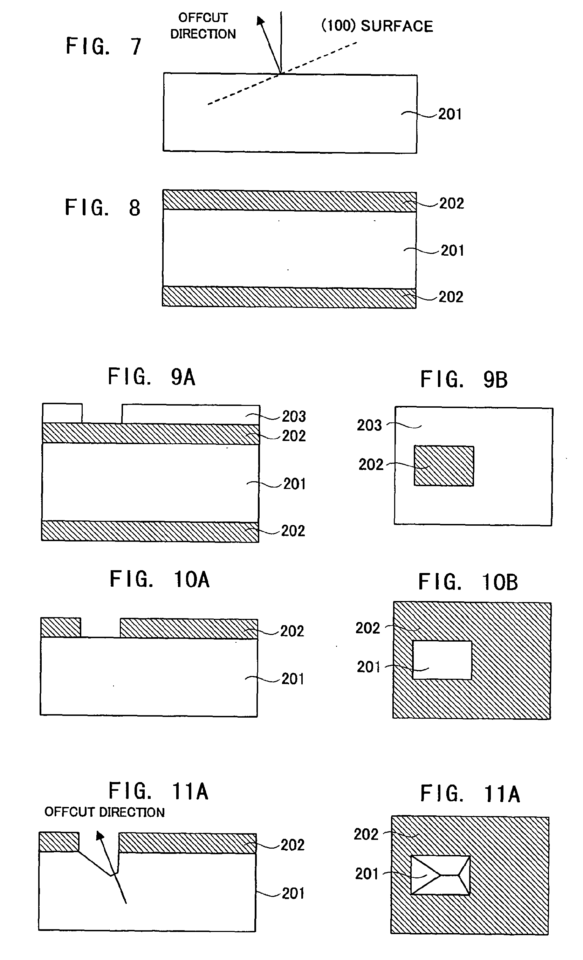

The support member 130 is a base for supporting the recording / reproducing head 100. The support member 130 has electric conductivity as with the projection portion 110. Moreover, as described later, the support member 130 and the projection portion 110 may be formed in one body (refer to FIG. 7 etc.).

Furthermore, as described later, the projection portion 110 and the support member 130 constitute a part of a resonance circuit 14 in the reproduction operation as a part of a probe 11 (refer to FIG. 25). Thus, it is possible to select their materials according to the inductance of the projection portion 110 and the support member 130 so as to obtain a desired resonance frequency (oscillation frequency). Moreover, by selecting the material in this manner, it is also possible to change the vibration frequency of the probe 11, as occasion demands.

FIG. 1B is a plan view when the recording / reproducing head 100 (especially the projection portion 110) shown in FIG. 1A is observed from the bottom side of FIG. 1A. As shown in FIG. 1B, the tip portion of the projection portion 110 has the ridge-line 110L which has the point 111 as its one end point. The ridge-line 110L is inclined on the basis of the horizontal direction (e.g. a surface direction of a front surface of the dielectric recording medium 20) and is constructed to contact (or substantially contact) the dielectric recording medium 20 at the point 111.

Even in a recording / reproducing head 101 as shown in FIG. 2A and FIG. 2B, as with the recoding / reproducing head 100 shown in FIG. 1A and FIG. 1B, it is the point 111 positioned at one end of the ridge-line 110L out of the projection portion 110 that actually contacts the dielectric recording medium 20.

Moreover, even if the projection portion 110 is not formed at one of the end portions of the support member 130, as shown in FIG. 3, the projection portion 110 may be formed at a predetermined position of the support member 130, for example. Even a recording /reproducing head 102 of this type can receive the above-described various benefits.

FIG. 4 shows that the recording / reproducing head 100 is in contact with the dielectric recording medium 20. As shown in FIG. 4, the point 111 is actually in contact with the dielectric recording medium 20, and the other portions of the projection portion 110 (particularly, the portion of the ridge-line 110L except the point 111) are out of contact with the dielectric recording medium 20.

Now, a comparison example of the recording / reproducing head in the embodiment will be explained with reference to FIG. 5A and FIG. 5B. As shown in FIG. 5A, in the recording / reproducing head in the comparison example, a ridge-line portion of a projection portion 110a extends substantially in the horizontal direction. More concretely, if the support member 130 is displaced in parallel with the front surface of the dielectric recording medium 20, the ridge-line of the projection portion 110a extends substantially in the horizontal direction with respect to the front surface of the dielectric recording medium 20. As shown in FIG. 5B, which shows the recording /reproducing head in FIG. 5A viewed from the bottom side, the ridge-line on the end portion is around the central portion of the projection portion 110a, substantially.

In the recording / reproducing head which requires for a machining accuracy of nanometer order, it is difficult to realize an ideal shape such as a quadrangular pyramid (i.e. the shape to contact the dielectric recording medium 20 at the point), and in fact, in many cases, the recording / reproducing head has a shape like that of the recoding / reproducing head in the comparison example. In this case, the recording / reproducing head in the comparison example can contact the dielectric recording medium 20 on the whole ridge-line, as shown in FIG. 5C, so that an electric field is likely applied over a plurality of domains associated with the dielectric recording medium 20. Therefore, upon recording the information, the electric field may be applied beyond a range in which the polarization condition (i.e. the polarization direction) is desirably changed, thereby to cause a possibility that the information cannot be recorded appropriately. Alternatively, upon reproducing the information, by applying an alternating electric field as described later beyond a domain in which the polarization condition desired to be detected is recorded, the polarization condition around the domain is reflected as, for example, a noise or the like, thereby to cause a possibility that the information cannot be reproduced appropriately.

However, in the recording / reproducing head 100 (or 101 or 102) in the embodiment, the projection portion 110 is inclined from the normal line of the recording surface, i.e., the ridge-line 110L is inclined from the recording surface, so that the recoding /reproducing head 100 (or 101 or 102) can contact the dielectric recording medium 20 at the point 111. Therefore, it is possible to appropriately apply an electric field in a single domain, and as a result, it is possible to record and reproduce the information appropriately.

Moreover, even in the recording / reproducing head as shown in FIG. 5A, FIG. 5B and FIG. 5C, as shown in FIG. 6, it may be constructed to contact the dielectric recording medium 20 at one point of the projection portion 110b by inclining the recording /reproducing head (specifically, the support member 130a) in advance with respect to the front surface of the dielectric recording medium 20 and mounting it onto a recording apparatus or a reproducing apparatus, or by the similar manner. Even if constituting in this manner, it is effective from the viewpoint of preventing the unexpected application of the electric field to the adjacent domains.

(ii) Production Method for Recording / Reproducing Head

Next, with reference to FIG. 7 to FIG. 22, the production method for the recording / reproducing head in the embodiment will be explained. FIG. 7 to FIG. 22 conceptually show each process of the production method for the recording / reproducing head in the embodiment.

Incidentally, the recording / reproducing head produced in the production method explained here has the projection portion 110 and the support member 130 which are unified. However, even if the projection portion 110 and the support member 130 are not unified, the recording / reproducing head can be produced in the same production method, and it is obvious that such a production method is also included in the scope of the present invention.

At first, as shown in FIG. 7, a silicon substrate 201 is prepared. The silicon substrate 201 mainly becomes a mold (molding box) for the recording / reproducing head.

Particularly in the embodiment, as the silicon substrate 201, a silicon offcut substrate is used. The silicon offcut substrate is a silicon substrate which is cut not along its (100) surface but at a predetermined angle with respect to the (100) surface, in cutting the substrate from a silicon wafer, for example. Namely, it is a silicon substrate whose crystal axis (i.e. the normal line of the (100) surface) is inclined at a predetermined angle with respect to the cut surface of the silicon substrate 201. Incidentally, an arrow shown in FIG. 7 indicates an offcut direction (i.e. a direction of the crystal axis) of the silicon substrate 201. By using the silicon substrate 201, it is possible to form a mold for forming the shape of the projection portion 110 of the recording / reproducing head 100 (101) as shown in FIGs. 1 and FIGs. 2, as described later.

Then, as shown in FIG. 8, silicon dioxide ($SiO_2$) films 202 are formed with respect to a front surface (or an upper surface in FIG. 8) and back surface (or a downside surface in FIG. 8) of the silicon substrate 201. In this case, the silicon dioxide films 202 may be formed on the surfaces by providing the silicon substrate 201 under an oxidizing atmosphere at high temperature.

Then, as shown in FIG. 9A, a photoresist 203 is coated by spin coating method, for example, and patterning is performed. Specifically, after the photoresist 203 is coated onto the silicon dioxide film 202 formed on one of the surfaces of the silicon substrate 201, ultraviolet rays or the like are irradiated thereon with a photo mask in which a portion corresponding to the projective portion 110 is patterned. Then, by developing it, the patterning of the photoresist 203 is performed as shown in FIG. 9A.

Incidentally, FIG. 9B shows the silicon substrate 201 etc. in FIG. 9A viewed from the top side (i.e. from the side where the photoresist 203 is patterned). As shown in FIG. 9B, in the portion where the projection portion 110 of the recording /reproducing head 100 will be formed later, a window (or space portion) at which the photoresist 203 is not coated can be seen, and the silicon dioxide film 202 can be seen at the window. The projection portion 110 will be formed later in accordance with the shape of this window.

Then, as shown in FIG. 10A, etching is performed with respect to the silicon substrate 201 in which the photoresist 203 is patterned as shown in FIGs. 9. Here, for example, BHF (Buffered HydroFluoric acid) or the like is used to perform the etching with respect to the portion where the photoresist 203 is not coated out of the silicon dioxide film 202. However, other etchant may be used for the etching, or dry etching may be performed for the etching.

After the etching of the silicon dioxide film 202, the photoresist 203 is removed. Here, the removal of the photoresist 203 may be performed by dry etching or wet etching.

FIG. 10B shows the silicon substrate 201 etc. in FIG. 10A viewed from the top side. As shown in FIG. 10B, in the portion where the projection portion 110 will be formed later, a window at which the silicon dioxide film 202 is not coated can be seen, and the silicon substrate 201 can be seen at the window.

Then, as shown in FIG. 11A, anisotropic etching is performed with respect to the silicon substrate 201. Here, for example, alkaline etchant, such as TMAH (TetraMethyl Ammonium Hydroxide) and KOH (Potassium Hydroxide), is used for the anisotropic etching.

Here, the silicon substrate 201 has such a characteristic that the etching can be performed in the normal direction of the (100) surface (i.e. the offcut direction in FIG. 11A), but it is relatively difficult to perform the etching in the normal direction of the (111) surface (i.e. a direction having an angular difference of approximately 45 degrees with respect to the offcut direction in FIG. 11A). To perform the anisotropic etching by using this characteristic, the silicon substrate 201 is etched such that it has a shape corresponding to the projective portion 110 shown in FIGs. 1 (i.e. a projection shape or pyramid shape) and that the ridge-line 110L is inclined. More specifically, it is etched such that the ridge-line 110L crosses the offcut direction at an angle of substantially 90 degrees.

Incidentally, FIG. 11B shows the silicon substrate 201 etc. in FIG. 11A viewed from the top side. The anisotropic etching is performed with respect to the silicon substrate 201, as shown in FIG. 11B, so that an etching rate is higher in the portion corresponding to the offcut direction, and the etching rate is lower in the portion corresponding to directions which are not along the offcut direction.

Incidentally, the recording / reproducing head associated with the above-described comparison example is generally produced by using a silicon substrate whose crystal axis is not inclined as a mold. Therefore, as with the recoding / reproducing head in the embodiment, in order to form the projection portion 110 which can contact the dielectric recording medium 20 at the point 111 (i.e. in order to form the projection portion 110 such as a quadrangular pyramid), it is necessary to apply the photoresist 203 such that the window of the photoresist 203 is square. The window of the photoresist 203 is preferably square, with an error between the long side and the short side of approximately several-tens nanometer order. However, it is difficult to form such a square accurately, under the condition of the nanometer order.

In the embodiment, the crystal axis is inclined, so that even if the photoresist 203 is not square but rectangular, for example, it is possible to produce the recording / reproducing head which can contact the dielectric recording medium 20 at the point 111 (i.e. at one point on the inclined ridge-line 110L). Therefore, without considering a fine mask on the order of nanometer, it is possible to produce the recording / reproducing head which can contact the dielectric recording medium 20 at the point 111, relatively easily and at low cost, which is extremely advantageous.

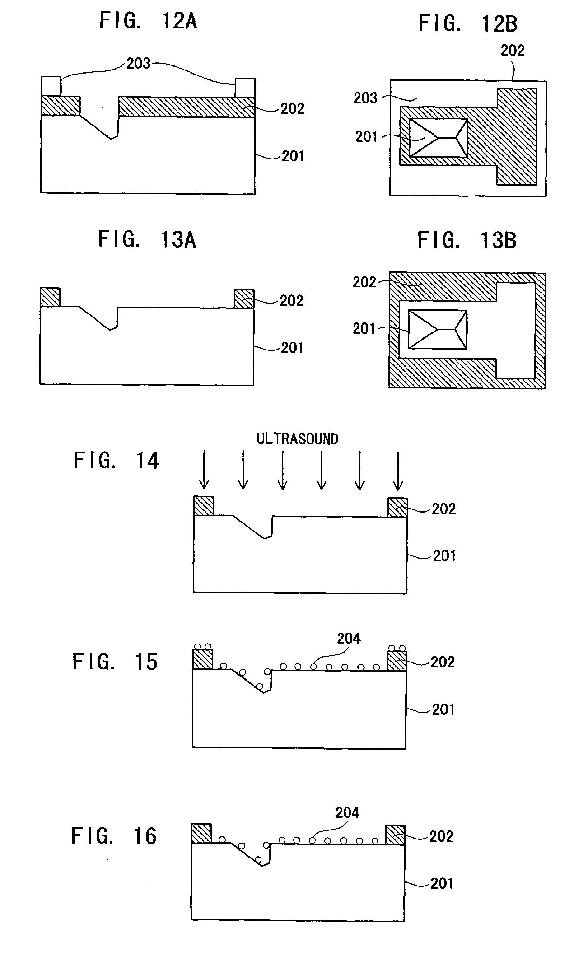

Then, as shown in FIG. 12A, the photoresist 203 is coated again for patterning.

Incidentally, FIG. 12B shows the silicon substrate 201 etc. in FIG. 12A viewed from the top side. As shown in FIG. 12B, the photoresist 203 in this case is patterned in accordance with the shape of the support member 130.

Then, as shown in FIG. 13A, etching is performed with respect to the silicon dioxide film 202 in accordance with the patterning of the photoresist 203 as shown in FIGs. 12, and then, the photoresist 203 is removed. The etching here is performed in the same procedure as that in FIGs. 10.

Incidentally, FIG. 13B shows the silicon substrate 201 etc. in FIG. 13A viewed from the top side. As shown in FIG. 13B, the silicon dioxide film 202 remains in accordance with the shape of the support member 130.

Then, as shown in FIG. 14, in methanol containing diamond powders, the surfaces of both the silicon substrate 201 and the silicon dioxide film 202 formed thereon are scratched, by vibrating the diamond powders by using ultrasound or the like, for example. By scratching the surfaces as described above, diamond nuclei can be formed in the following process (refer to FIG. 15).

Then, as shown in FIG. 15, a diamond film is formed by Hot Filament CVD (Chemical Vapor Deposition). For example, using $CH_4$ (methane) gas as a material, the diamond film is formed on the silicon substrate 201. In particular, the diamond film grows at the position of the scratch which is made in the process in FIG. 14. Incidentally, not only Hot Filament CVD, but also Microwave Plasma CVD or other film growth methods or the like may be used to grow the diamond film.

Moreover, the diamond film is used as the above-described projection portion 110, so that it needs to have electric conductivity. Therefore, B (Boron) is doped in the diamond film by adding a doping gas, such as $B_2H_6$ (diborane) and $(CH_3O)_3B$ (trimethoxy boron).

Incidentally, the method of growing the diamond film is not limited to the one by the scratch process as shown in FIG. 14. The diamond film may be grown by applying a negative bias voltage to the silicon substrate 201 at the initial stage of the CVD process, or by applying ultra micro diamond powders to the silicon substrate 201, to thereby use the ultra micro diamond powders as the nuclei for growing the diamond film.

Then, as shown in FIG. 16, diamond particles which are growing on the silicon dioxide film 202 are removed. The removal of an extremely small amount of silicon dioxide film 202 by way of etching with BHF or the like can result in the removal of the diamond particles. By this, it is possible to form the projection portion 110 and the support member 130 which have appropriate shapes.

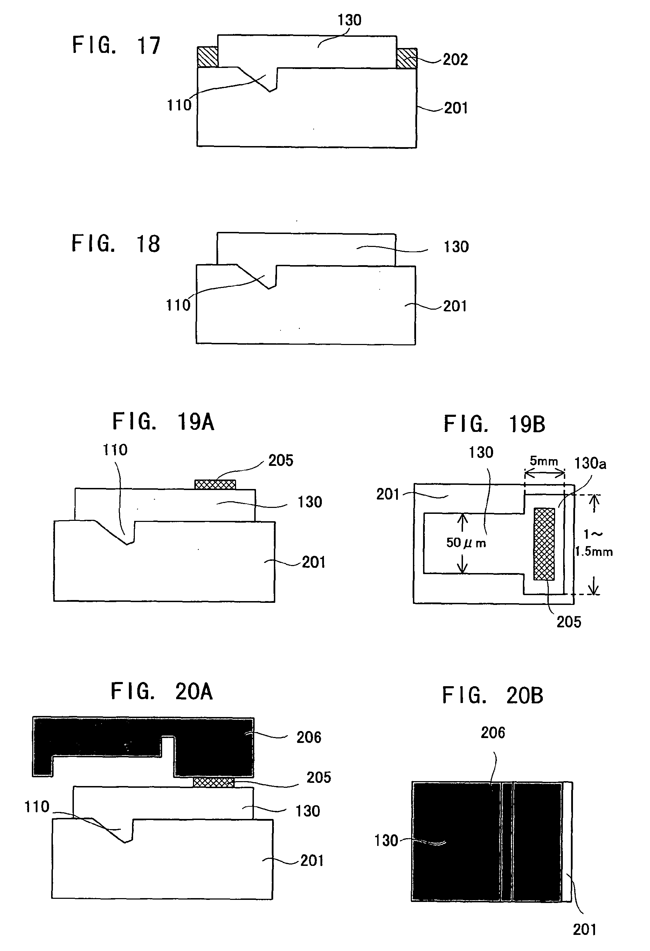

Then, as shown in FIG. 17, the diamond film is further grown by using Hot Filament CVD or the like, for example, to thereby form the projection portion 110 and the support member 130.

Incidentally, in this case, the support member 130 and the projection portion 110 are formed in one body, so that in the explanation below, the projection portion 110 shall include a function as the support member 130.

Then, after the projection portion 110 is formed, etching is performed, as shown in FIG. 18, and the silicon dioxide film 202 is removed. Here, for example, BHF or the like is used to remove the silicon dioxide film 202.

Then, as shown in FIG. 19A, photosensitive polyimide 205 is formed on a surface opposite to the side where the portion corresponding to the projection portion 110 is formed, in the portion corresponding to the support member 130. The photosensitive polyimide 205 is used for attachment to a glass 206 (refer to FIGs. 20) for supporting or maintaining the entire recording / reproducing head in a later process.

Incidentally, FIG. 19B shows the silicon substrate 201 etc. in FIG. 19A viewed from the top side. As shown in FIG. 19B, the photosensitive polyimide 205 is patterned on a portion opposite to a portion extending in the longitudinal direction out of the portion corresponding to the support member 130 (i.e. on a support base 130a).

Incidentally, with respect to the specific size of the recording /reproducing head shown in FIG. 19B, the portion extending in the longitudinal direction is preferably 50 μm or less wide. Then, preferably, the portion opposite to the portion extending in the longitudinal direction is approximately 5 mm × 1~1.5 mm. However, they are not limited to the above size. With respect to the shape thereof, it is not limited to a T-shape as shown in FIG. 19B, but it may be other shapes such as a L-shape.

In this case, the support member 130 is unified with a support base 130a. The support base 130a is fixed, and the support member 130 is unified with the support base 130a such that the support member 130 can move (or wobble or oscillate) slightly as a cantilever in accordance with its elasticity. Even in this case, the support member 130 and the support base 130a may be collectively referred to as the support member 130.

Then, as shown in FIG. 20A, the glass 206 to which a groove-cutting process is performed is attached to the photosensitive polyimide 205. The glass 206 is a member for supporting or maintaining the entire recording / reproducing head. By connecting an actuator or the like to the glass 206, it is possible to displace the recording / reproducing head on or above the dielectric recording medium, in the recording and reproduction operations of the dielectric recording / reproducing apparatus described later.

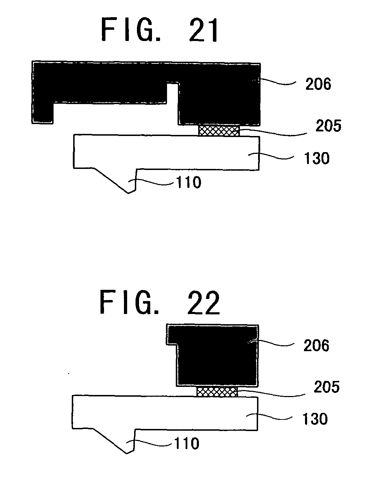

Moreover, the groove-cutting machining is performed to the glass 206, by forming a cut in the vicinity of the center of the glass 206. This is formed to easily break the glass 206 in a process described later (refer to FIG. 22).

Incidentally, FIG. 20B shows the silicon substrate 201 etc. in FIG. 20A viewed from the top side. As shown in FIG. 20B, the glass 206 is large enough to cover the whole projection portion 110. However, the size of the glass 206 shown in FIG. 20B is merely an example. Even if the glass 206 is larger than or smaller than this size, it is enough if it is large enough to support the entire recording /reproducing head.

Then, as shown in FIG. 21, the silicon substrate 201 is removed. Here, the silicon substrate 201 is removed from the projection portion 110 by using RIE (Reactive Ion Etching). However, other methods may be used to remove the silicon substrate 201.

Then, as shown in FIG. 22, the glass 206 is broken along the cut, to thereby complete the recording / reproducing head 100 (or 101) which can be used as the probe 11 described later.

(iii) Modified Examples

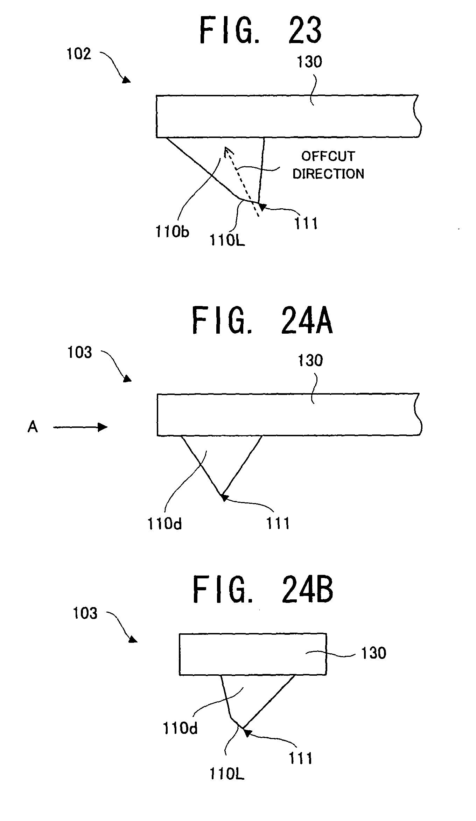

Then, with reference to FIG. 23 and FIGs. 24, the modified example of the recording / reproducing head in the embodiment will be explained. FIG. 23 and FIGs. 24 conceptually show structures of the recording / reproducing head in the modified examples.

As with the recording / reproducing head 102 in one modified example shown in FIG. 23, it is possible that the ridge-line 110L does not cross the above-described offcut direction at an angle of 90 degrees. Even such a recording / reproducing head 102 can contact the dielectric recording medium 20 at the point 111, to thereby receive the above-described various benefits.

Moreover, as with a recording / reproducing head 103 in another modified example shown in FIGs. 24, it is possible that the ridge-line 110L is inclined in a direction crossing the longitudinal direction of the support member 130. Namely, even if the ridge-line 110L is not inclined along the longitudinal direction of the support member 130 as in the case of the above-described recording /reproducing head 100 or the like, it is possible to receive the above-described various benefits.

(2) Embodiment of Recording / Reproducing Apparatus

Next, the recoding / reproducing apparatus which uses the recording / reproducing head in the embodiment described above will be explained.

(i) Basic Structure

At first, the basic structure of the dielectric recording /reproducing apparatus in the embodiment will be explained with reference to FIG. 25. FIG. 25 conceptually shows the basic structure of the dielectric recording / reproducing apparatus in the embodiment.

The dielectric recording / reproducing apparatus 1 is provided with: the probe 11 for applying an electric field with its tip portion facing a dielectric material 17 of the dielectric recording medium 20; a return electrode 12 for returning the high-frequency electric field for reproduction applied from the probe 11; an inductor L placed between the probe 11 and the return electrode 12; an oscillator 13 which oscillates at a resonance frequency determined from the inductor L and a capacitance Cs in a portion formed in the dielectric material 17 under the probe 11 and polarized correspondingly to the record information; an alternating current (AC) signal generator 21 for applying an alternating electric field which is intended to detect the polarization condition recorded in the dielectric material 17; a record signal generator 22 for recording the polarization condition into the dielectric material 17; a switch 23 for switching outputs from the AC signal generator 21 and the record signal generator 22; a High Pass Filter (HPF) 24; a demodulator 30 for demodulating a FM signal modulated by the capacitance Cs corresponding to the polarization condition owned by the dielectric material 17 under the probe 11; a signal detector 34 for detecting data from the demodulated signal; and a tracking error detector 35 for detecting a tracking error signal from the demodulated signal.

The probe 11 is connected to the oscillator 13 via the HPF 24, and connected to the AC signal generator 21 and the record signal generator 22 via the HPF 24 and the switch 23. Incidentally, with respect to the probe 11, for example, a cantilever shape or a needle shape, as in FIGs. 1 and FIGs. 2, or the like is known as its specific shape.

Particularly in the embodiment, as the probe 11, the recording / reproducing head 100 in the embodiment described above is used. Namely, the recording / reproducing head which can contact the dielectric recording medium 20 at the point 111 is used.

Incidentally, it is also possible that a plurality of probes 11 are provided. In this case, a plurality of AC signal generators 21 are preferably provided for the respective probes 11. Moreover, in order to distinguish, on the signal detector (detectors) 34, reproduction signals corresponding to each of a plurality of the AC signal generators 21, it is preferable that a plurality of signal detectors 34 are provided and that each of the signal detectors 34 obtains reference signal from the corresponding AC signal generator 21, to thereby output the corresponding reproduction signal.

The return electrode 12 is an electrode for returning the high-frequency electric field applied to the dielectric material 17 from the probe 11 (i.e. a resonance electric field from the oscillator 13), and is placed to surround the probe 11. Incidentally, the shape and placement of the return electrode 12 can be arbitrarily set as long as the high-frequency electric field can return to the return electrode 12.

The inductor L is placed between the probe 11 and the return electrode 12, and may be formed using a micro-strip-line, for example. The inductor L and the capacitance Cs constitute the resonance circuit 14. The inductance of the inductor L is determined such that this resonance frequency is approximately 1 GHz, for example.

The oscillator 13 is an oscillator which oscillates at the resonance frequency determined from the inductor L and the capacitance Cs. The resonance frequency varies, depending on the change of the capacitance Cs. Therefore, FM modulation is performed correspondingly to the change of the capacitance Cs determined by the polarization domain corresponding to the recorded data. By demodulating this FM modulation signal, it is possible to read the data recorded in the dielectric recording medium 20.

Incidentally, as described in detail later, the probe 11, the return electrode 12, the oscillator 13, the inductor L, the HPF 24, and the capacitance Cs in the dielectric material 17 constitute the resonance circuit 14. The FM signal amplified on the oscillator 13 is outputted to the demodulator 30.

The AC signal generator 21 applies an alternating electric field to between the return electrode 12 and an electrode 16. The frequency of the alternating electric field is approximately 5kHz, and the alternating electric field is applied to the domain of the dielectric material 17. In the dielectric recording / reproducing apparatus having the plurality of proves 11, the frequencies of the alternating electric fields are used as reference signals in the signal detector (detectors) 34 to distinguish reproduction signals detected with the probes 11.

The record signal generator 22 generates a signal for recording (hereinafter referred to as a "record signal"), which is supplied to the probe 11 at the time of recording. This record signal is not limited to a digital signal but may be an analog signal. This record signal includes various signals, such as audio data, video data, and digital data for a computer. An AC signal which is superimposed to the record signal is used, as a reference signal in the reproduction operation, to distinguish and reproduce the reproduction signal of each probe 11.

The switch 23 selects its output to supply an AC signal (the alternating electric field) from the AC signal generator 21 at the time of reproducing, or a record signal from the record signal generator 22 at the time of recording, to the probe 11. A mechanical relay or a semiconductor circuit may be used for this device. In the case of the analog signal, the relay is preferably provided, and in the case of the digital signal, the semiconductor circuit is preferably provided.

The HPF 24 includes an inductor and a condenser. The HPF 24 is used to constitute a high pass filter for cutting off a signal system to prevent the signals obtained from the AC signal generator 21 and the record signal generator 22 from interfering with the oscillation of the oscillator 13. The cut-off frequency is $f=1/\{2\pi\sqrt{(LC)}\}$, wherein L is the inductance of the inductor included in the HPF 24, and C is the capacitance of the condenser included in the HPF 24. The frequency of the AC signal is approximately 5KHz, and the resonance frequency of the oscillator 13 is approximately 1GHz, so that the separation at a first LC filter can be performed sufficiently. A higher-order filter may be used, but since the number of elements increases, the size of the apparatus may be increased.

The demodulator 30 demodulates the resonance frequency of the oscillator 13, which is FM-modulated due to the small change of the capacitance Cs, and reconstructs a waveform corresponding to the polarized condition of a portion which is traced by the prove 11. If the recorded data are digital data of "0" and "1", there are two types of frequencies which are modulated, and the data is reproduced easily by distinguishing the frequencies.

The signal detector 34 reproduces the recorded data from the signal demodulated on the demodulator 30. A lock-in amplifier is used as the signal detector 34, for example, and synchronized detection is performed on the basis of the frequency of the alternating electric field of the AC signal generator 21, to thereby reproduce the data. Incidentally, it is obvious that other phase detection devices may be used.

The tracking error detector 35 detects a tracking error signal for controlling the apparatus (especially, tracking operation), from the signal demodulated on the demodulator 30. The detected tracking error signal is inputted into a tracking mechanism for the control.

Next, one example of the dielectric recording medium 20 shown in FIG. 25 will be explained with reference to FIG. 26A and FIG. 26B. FIG. 26A and FIG. 26B conceptually show one example of the dielectric recording medium 20 used in the embodiment.

As shown in FIG. 26A, the dielectric recording medium 20 is a disc-shaped dielectric recording medium, and is provided with: a center hole 10, an inner area 7, a record area 8, and an outer area 9. The inner area 7, the record area 8, and the outer area 9 are placed concentrically from the center hole 10 in this order. The center hole 10 is used in the case where the dielectric recording medium 20 is mounted on a spindle motor or the like.

The record area 8 is an area to record the data therein and has tracks and spaces between the tracks. Moreover, on the tracks and the spaces, such areas are provided that record therein control information associated with the record and reproduction. Furthermore, the inner area 7 and the outer area 9 are used to recognize the inner position and the outer position of the dielectric recording medium 20, respectively, and can be used as areas to record therein information about the data which is recorded, such as a title, its address, a recording time length, and a recording capacity. Incidentally, the above-described construction is one example of the dielectric recording medium 20, and other construction, such as a card-shape, can be also adopted.

Moreover, as shown in FIG. 26B, the dielectric recording medium 20 is formed such that the electrode 16 is laminated on a substrate 15 and that the dielectric material 17 is laminated on the electrode 16.

The substrate 15 is Si (silicon), for example, which is a preferable material in its strength, chemical stability, workability, or the like. The electrode 16 is intended to apply an electric field between the electrode 16 and the probe 11 (or the return electrode 12). By applying such an electric field to the dielectric material 17 that is greater than the coercive electric field of the dielectric material 17, the polarization direction is determined. By determining the polarization direction in accordance with the data, the record operation is performed.

The dielectric material 17 is formed by using a known technique, such as spattering method of $LiTaO_3$ or the like, which is a ferroelectric substance, onto the electrode 16. The record operation is performed with respect to such a Z surface of LiTa03 that the plus and minus surfaces of the polarization have a 180-degree domain relationship. It is obvious that other dielectric materials may be used. The dielectric material 17 forms the small polarization at high speed by using a direct current bias voltage and a voltage for the data which are both applied at the same time.

Alternatively, as the shape of the dielectric recoding medium 20, for example, there are a disc shape and a card shape and the like. The displacement of the relative position with the probe 11 is performed by the rotation of the dielectric recording medium 20, or by displacing linearly either the probe 11 or the dielectric recording medium 20.

(ii) Operation Principle

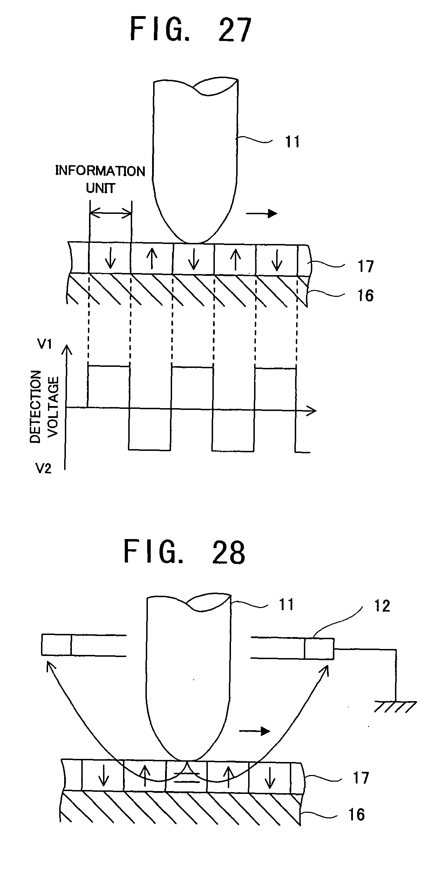

Next, with reference to FIG. 27 and FIG. 28, the operation principle of the dielectric recording / reproducing apparatus 1 in the embodiment will be explained. Incidentally, in the explanation below, a part of the constituent elements of the dielectric recoding /reproducing apparatus 1 shown in FIG. 25 is extracted and explained.

(Record Operation)

At first, with reference to FIG. 27, the record operation of the dielectric recording / reproducing apparatus 1 in the embodiment will be explained. FIG. 27 conceptually shows the record operation of recording the information.

As shown in FIG. 27, by applying an electric field which is greater than the coercive electric field of the dielectric material 17 to between the probe 11 and the electrode 16, the dielectric material 17 is polarized having directions corresponding to the direction of the applied electric field. Then, by controlling an applied voltage (an applied electric field) to change the polarization direction, it is possible to record predetermined information. This uses such a characteristic that the polarization direction is reversed when an electric field greater than the coercive electric field of a dielectric substance (particularly, a ferroelectric substance) is applied to the dielectric substance and that the polarization direction is maintained after stopping applying the electric field.

For example, it is assumed that the domains have a downward polarization P when an electric field is applied from the probe 11 to the electrode 16, and that the domains have an upward polarization P when an electric field is applied from the electrode 16 to the probe 11. This corresponds to a condition where the information is recorded. If the probe 11 is moved in a direction shown with the arrow, a detection voltage is outputted as a rectangular wave having a high level or a low level (i.e. the digital signal), correspondingly to the polarization P. Incidentally, this level varies depending on the extent of the polarization P, to thereby allow the recording as the analog signal.

Particularly in the embodiment, the use of the recording /reproducing head 100 as the probe 11 allows the contact (substantially contact) with the dielectric recording medium 20 at the point 111. Therefore, it is possible to apply an electric field with pinpoint precision with respect to a domain whose polarization direction is originally desired to be changed. If the recording /reproducing head in the comparison example shown in FIG. 4, for example, the electric field is likely applied to not only the domain of interest but also adjacent domains. However, according to the embodiment, the recording / reproducing head 100 as being the probe 11 can contact (substantially contact) the dielectric recording medium 20 at the point 111, so that it is possible to appropriately apply an electric field with respect to the domain whose polarization direction is originally desired to be changed, without influencing on the polarization conditions of the adjacent domains. Therefore, it is possible to stabilize the record operation on the dielectric recording /reproducing apparatus 1.

(Reproduction Operation)

Next, with reference to FIG. 28, the reproduction operation of the dielectric recording / reproducing apparatus 1 in the embodiment will be explained. FIG. 28 conceptually shows the reproduction operation of reproducing the information.

The non-linear dielectric constant of a dielectric substance changes correspondingly to the polarization direction of the dielectric substance. The non-linear dielectric constant of the dielectric substance can be detected as a difference in the capacitance of the dielectric substance or a difference in the change of the capacitance, when an electric field is applied to the dielectric substance. Therefore, by applying an electric field to a dielectric material and detecting, at that time, a difference in the capacitance Cs or a difference in the change of the capacitance Cs in a certain domain of the dielectric material, it is possible to read and reproduce the data recorded as the polarization direction of the dielectric material.

Specifically, at first, as shown in FIG. 28, an alternating electric field from the not-illustrated AC signal generator 21 is applied to between the electrode 16 and the probe 11. The alternating electric field has such an electric field strength that is not beyond the coercive electric field of the dielectric material 17, and has a frequency of approximately 5kHz, for example. The alternating electric field is generated mainly to distinguish the difference in the change of the capacitance corresponding to the polarization direction of the dielectric material 17. Incidentally, in place of the alternating electric field, a direct current bias voltage may be applied to form an electric field in the dielectric material 17. The application of the alternating electric field causes the generation of an electric field in the dielectric material 17 of the dielectric recording medium 20.

Then, the probe 11 is approached to the recording surface until the distance between the tip of the probe 11 and the recording surface becomes extremely small on the order of nanometers. Under this condition, the oscillator 13 is driven. Incidentally, in order to detect the capacitance Cs of the dielectric material 17 under the probe 11 highly accurately, it is preferable to contact the probe 11 with the surface of the dielectric material 17, i.e. the recording surface. However, in order to read the data recorded in the dielectric material 17 at high speed, it is necessary to relatively displace the probe 11 on the dielectric recording medium 20 at high speed. Thus, in view of reliability in the high-speed displacement, and the prevention of damage caused by the collision and friction between the probe 11 and the dielectric recording medium 20, or the like, it is practically better to make the probe 11 approach the recording surface close enough to regard this as the actual contact (i.e. substantially contact), than make the probe 11 contact the recording surface. Particularly in the embodiment, it is the point 111 out of the probe 11 that contacts the recording surface.

Then, the oscillator 13 oscillates at the resonance frequency of the resonance circuit, which includes the inductor L and the capacitance Cs associated with the dielectric material 17 under the probe 11 as the constituent factors. The central frequency of the resonance frequency is set to approximately 1GHz, as described above.

Here, the return electrode 12 and the probe 11 constitute a part of the resonance circuit 14 including the oscillator 13. The high-frequency signal of approximately 1GHz, which is applied to the dielectric material 17 from the probe 11, passes through the dielectric material 17 and returns to the return electrode 12, as shown with solid lines in FIG. 28. By placing the return electrode 12 in the vicinity of the probe 11 and shortening a feedback route to the resonance circuit 14 including the oscillator 13, it is possible to reduce a chance of noise (e. g. floating capacitance) entering the resonance circuit 14.

In addition, the change of the capacitance Cs corresponding to the non-linear dielectric constant of the dielectric material 17 is extremely small, and in order to detect this change, it is necessary to adopt a detection method having high detection accuracy. In a detection method using FM modulation, generally, it is possible to achieve the high detection accuracy, but it is necessary to further improve the detection accuracy to likely detect the small capacitance change corresponding to the non-linear dielectric constant of the dielectric material 17. Thus, in the dielectric recording /reproducing apparatus 1 in the embodiment (i.e. a recording /reproducing apparatus which uses the SNDM principle), the return electrode 12 is placed in the vicinity of the probe 11 to shorten the feedback route (the feedback path) to the resonance circuit 14 as much as possible. By this, it is possible to obtain extremely high detection accuracy, and thus it is possible to detect the small capacitance change corresponding to the non-linear dielectric constant of the dielectric substance.

After the oscillator 13 is driven, the probe 11 is displaced in parallel with the recording surface on the dielectric recording medium 20. By the displacement, the domain of the dielectric material 17 under the probe 11 is changed, and whenever its polarization direction changes, the capacitance Cs changes. If the capacitance Cs changes, the resonance frequency (the oscillation frequency) of the oscillator 13 changes. As a result, the oscillator 13 outputs a signal which is FM-modulated on the basis of the change of the capacitance Cs.

This FM signal is frequency-voltage converted by the demodulator 30. As a result, the change of the capacitance Cs is converted to the change of a voltage. The change of the capacitance Cs corresponds to the non-linear dielectric constant of the dielectric material 17. The non-linear dielectric constant corresponds to the polarization direction of the dielectric material 17. The polarization direction corresponds to the data recorded in the dielectric material 17. Therefore, a signal obtained from the demodulator 30 is a signal whose voltage changes correspondingly to the data recorded in the dielectric recording medium 20. Moreover, the signal obtained from the demodulator 30 is supplied to the signal detector 34, and the data recorded in the dielectric recording medium 20 is extracted by the synchronized detection, for example.

At this time, in the signal detector 34, the AC signal generated by the AC signal generator 21 is used as a reference signal. This makes it possible to extract the data highly accurately by referring the reference signal (i.e. synchronizing with the reference signal), as described above, even if the signal obtained from the demodulator 30 includes much noise or the data to be extracted is weak, for example.

Particularly, in the embodiment, the use of the recording /reproducing head 100 as the probe 11 allows the contact (substantially contact) with the dielectric recording medium 20 at the point 111. Therefore, it is possible to apply an alternating electric field with pinpoint precision with respect to a domain whose polarization direction is originally desired to be detected. If the recording / reproducing head in the comparison example shown in FIG. 4, for example, the alternating electric field is likely applied to not only the domain of interest but also adjacent domains. However, according to the embodiment, the recording / reproducing head 100 as being the probe 11 can contact (substantially contact) the dielectric recording medium 20 at the point 111, so that it is possible to appropriately apply an alternating electric field with respect to the domain whose polarization direction is originally desired to be detected, without being influenced by the polarization conditions of the adjacent domains. Therefore, it is possible to remove a bad influence, such as instability or change in the capacitance Cs, according to the polarization conditions of the domains adjacent to the domain of interest. Therefore, it is possible to stabilize the reproduction operation of the dielectric recording / reproducing apparatus 1.

Moreover, in the above-described embodiment, the dielectric material 17 is used for a recording layer, but from the viewpoint of the presence or absence of spontaneous polarization and the non-linear dielectric constant, the dielectric material 17 is preferably a ferroelectric substance.

**Claims**

1. A recording / reproducing head (100) for performing at least one of a record operation of recording information onto a dielectric recording medium (20) and a reproduction operation of reproducing the information from the dielectric recording medium (20),
   **characterized in that** said recording / reproducing head (100) comprises:

   a support member (130) which extends in a longitudinal direction; and
   a projection portion (110) which is mounted on said support member (130) such that a tip of said projection portion (110) faces the dielectric recording medium (20),

   said projection portion (110) having a ridge-line (110L) on the tip,
   said projection portion (110) being capable of contacting the dielectric recording medium (20) at one point (111) on the ridge-line (111L).

2. The recording / reproducing head (100) according to claim 1, **characterized in that** the ridge-line (110L) is inclined with respect to a recording surface of the dielectric recording medium (20).

3. The recording / reproducing head (100) according to claim 2, **characterized in that**
   said projection portion (110) comprises a crystal, and
   a crystal axis of the crystal is inclined with respect to a normal line of the recording surface of the dielectric recording medium (20) and crosses the ridge-line (110L) at substantially right angles.

4. The recording / reproducing head (100) according to any one of claims 1 to 3, **characterized in that** the ridge-line (110L) extends along the longitudinal direction.

5. The recording / reproducing head (100) according to any one of claims 1 to 4, **characterized in that** said projection portion (110) is formed by using a mold which is formed by performing anisotropic etching with respect to an offcut substrate.

6. A production method of producing a recording / reproducing head (100) for performing at least one of a record operation of recording information onto a dielectric recording medium (20) and a reproduction operation of reproducing the information from the dielectric recording medium (20), said recording / reproducing head (100) comprising: a support member (130) which extends in a longitudinal direction; and a projection portion (110) which is mounted on said support member (130) such that a tip of said projection portion (110) faces the dielectric recording medium (20), said projection portion (110) having a ridge-line (110L) on the tip, said projection portion (110) being capable of contacting the dielectric recording medium (20) at one point (111) on the ridge-line (110L),

characterized in that said production method comprises:

a mold-forming process of forming a mold for forming said projection portion (110) and said support member (130); and
a member-forming process of forming said projection portion (110) and said support member (130) by using the formed mold,

an offcut substrate being used as the mold in said mold-forming process.

7. The production method according to claim 6, **characterized in that** the mold for forming said projection portion (110) is formed by performing anisotropic etching in said mold-forming process.

8. The production method according to claim 7, **characterized in that** the anisotropic etching is performed by using a rectangular masking, in forming the mold for forming said projection portion (110) in said mold-forming process.

9. The production method according to any one of claims 6 to 8, **characterized in that** at least said projection portion (110) is formed by growing a crystal in a concave portion which is etched with an inclination in association with at least said projection portion (110) in the mold in said member-forming process.

10. A recording apparatus (1) for recording data onto a dielectric recording medium (20),
characterized in that said recording apparatus (1) comprises:

a recording / reproducing head (100) for performing at least one of a record operation of recording information onto the dielectric recording medium (20) and a reproduction operation of reproducing the information from the dielectric recording medium (20), said recording / reproducing head (100) comprising: a support member (130) which extends in a longitudinal direction; and a projection portion (110) which is mounted on said support member (130) such that a tip of said projection portion (110) faces the dielectric recording medium (20), said projection portion (110) having a ridge-line (110L) on the tip, said projection portion (110) being capable of contacting the dielectric recording medium (20) at one point (111) on the ridge-line (110L); and
a record signal generating device (22) for generating a record signal corresponding to the data.

11. A reproducing apparatus (1) for reproducing data recorded on a dielectric recording medium (20),
characterized in that said reproducing apparatus (1) comprises:

a recording / reproducing head (100) for performing at least one of a record operation of recording information onto the dielectric recording medium (20) and a reproduction operation of reproducing the information from the dielectric recording medium (20), said recording / reproducing head (100) comprising: a support member (130) which extends in a longitudinal direction; and a projection portion (110) which is mounted on said support member (130) such that a tip of said projection portion (110) faces the dielectric recording medium (20), said projection portion (110) having a ridge-line (110L) on the tip, said projection portion (110) being capable of contacting the dielectric recording medium (20) at one point (111) on the ridge-line (110L);
an electric field applying device (21) for applying an electric field to the dielectric recording medium (20);
an oscillating device (13) whose oscillation frequency varies depending on a difference in a capacitance (Cs) corresponding to a non-linear dielectric constant of the dielectric recording medium (20); and
a reproducing device (34) for demodulating and reproducing an oscillation signal from said oscillating device (13).

## FIG. 1A

100

130

110L

110

111

## FIG. 1B

110L

111

110

## FIG. 2A

101

130

110

110L

111

## FIG. 2B

110L

111

110

# FIG. 3

102

130

110L

110

111

# FIG. 4

100

130

110

111

20

## FIG. 5A

100a

130a

110a

## FIG. 5B

110a

## FIG. 5C

100a

130a

110a

20

# FIG. 6

FIG. 7

OFFCUT
DIRECTION

(100) SURFACE

201

FIG. 8

202
201
202

FIG. 9A

203
202

201

202

FIG. 9B

203

202

FIG. 10A

202

201

FIG. 10B

202

201

FIG. 11A

OFFCUT DIRECTION

202

201

FIG. 11A

202

201

FIG. 12A

203
202
201

FIG. 12B

202
203
201

FIG. 13A

202
201

FIG. 13B

202
201

ULTRASOUND

FIG. 14

202
201

FIG. 15

204
202
201

FIG. 16

204
202
201

FIG. 17

FIG. 18

FIG. 19A

FIG. 19B

FIG. 20A

FIG. 20B

# FIG. 21

206

205

130

110

# FIG. 22

206

205

130

110

# FIG. 23

102

130

OFFCUT
DIRECTION

110b    110L    111

# FIG. 24A

103

130

A →

110d    111

# FIG. 24B

103

130

110d    111

110L

FIG. 25

TRACKING ERROR DETECTOR 35

DEMODULATOR 30

TRACKING ERROR SIGNAL

OSCILLATOR 13

14

1

SIGNAL DETECTOR 34

OUTPUT

24

11

12  130

110

L

17  16  15

20

Cs

23

RECORD SIGNAL GENERATOR 22

21

# FIG. 26A

20

10

7

A ——————————————————— A

8

9

# FIG. 26B

10   7   8   9

17

16

15

# FIG. 27

# FIG. 28